# EUROPEAN PATENT SPECIFICATION

(11) **EP 1 607 869 B1**
(45) Date of publication and mention of the grant of the patent: **08.10.2008**
(21) Application number: 04014035.2
(22) Date of filing: 16.06.2004
(51) Int. Cl.: G06F 12/08

(54) **Data cache system**
Datum-Pufferspeichersystem
Système d'antémémoire de données

(43) Date of publication of application: 21.12.2005
(73) Proprietor: FREESCALE SEMICONDUCTORS, INC., Austin, Texas 78735 (US)
(72) Inventor: Godin, Konstantin, Bat Yam 50953 (IL); Anschel, Moshe, Kafr-Sabe 44418 (IL); Efrat, (Yacov), Jacob, Kfar-Saba (IL); Mischlovsky, Yariv, Ariel 44837 (IL); Moscovithz, Liat, Petah-Tikva 49336 (IL)
(74) Representative: Ferro, Frodo Nunes

(56) References cited:
- EP-A- 0 397 995
- US-A- 5 850 632

## Description

### Field of the Invention

The present invention relates to a data cache system and a method for transferring data from a data cache to system memory.

### Background of the Invention

In many computing systems the memory devices that form the system memory are relatively slow compared to the processor speed. As such, during accesses to system memory the processor needs to insert additional wait states to accommodate the slower memory devices.

Consequently, system performance can be enhanced during memory accesses using a caching scheme where a data cache provides fast local storage for data that is frequently used by the processor. The slower system memory is only accessed by the processor if the memory operation cannot be completed with the cache.

Since cache memory is used to hold a temporary copy of data stored in system memory it is possible that two copies of a particular piece of data can exist, one in system memory and a duplicate in cache. As such, one feature that can affect system performance is the handling of processor writes to either the system memory or cache. For example, during a processor write to a predetermined address in cache the data is modified in the cache but not in the system memory and therefore the cache and system memory become incoherent.

One technique for handling incoherency is called 'write back'. Write back involves setting a register bit to indicate that the corresponding contents of the cache and system memory are different, where the set register bit is called a 'dirty' bit. If a dirty bit has been set then a subsequent processor access to the cache will result in a data 'miss' and a line of the cache must be flushed from the cache to allow the 'missed' data to be placed into the cache; and the 'dirty' part of the flushed line be written to the external memory via a write back buffer during a spare time interval.

The dirty entries of a cache line can be written to external memory as single bus transfers, however the use of single transfers typically require that the external memory be initialised (for example, opening rows in SDRAM, as well as in FLASH; performing arbitration within different multiplexers) for each transfer.

As such, to maximise utilization of the system bus bandwidth the transfer of data from the cache to system memory during a write back operation is typically performed through burst mode data transfer cycles, where a burst is a group of data transfer cycles; with a data transfer cycle being equal to the width of the system bus connecting the cache and the system memory.

However, since the size of a cache line is typically significantly larger than the size of the system bus, a burst mode data transfer of the entire cache line to the system memory can use a significant portion of the available system bus bandwidth.

Further, contemporary computer systems typically implement a hierarchical memory architecture where optimal burst sizes for the different memory types used are different.

Document US-A-5850632 discloses a method for transferring data from a data cache to system memory characterised by selecting a data burst size for transferring data from the data cache to the system memory based upon memory characteristics associated with the system memory.
Document EP-A-0397995 discloses a write back cache wherein either a word or the entire cache line is written back depending on the number of dirty bits associated with each word of the cache line.

It is desirable to provide an improved data write back.

### Statement of Invention

The present invention provides apparatus and a method as described in the accompanying claims.

This provides the advantage of allowing an optimal data burst size to be used for different system memory types to allow efficient writing of data into the respective memory types.

### Brief Description of the Drawings

The present invention will now be described, by way of example, with reference to the accompanying drawings, in which:
Figure 1 illustrates a data cache system coupled to system memory according to an embodiment of the present invention;
Figure 2 illustrates an example of a cache line for which data write back need to occur.

### Description of a Preferred Embodiment

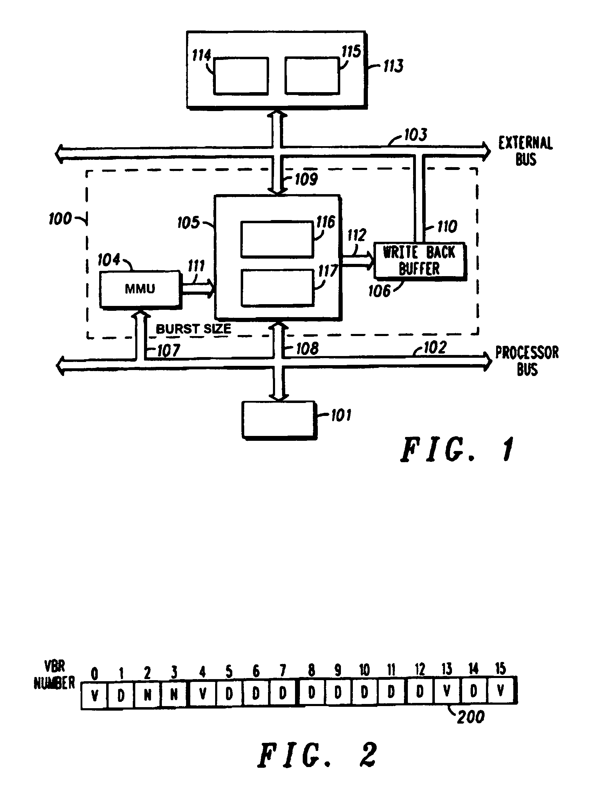

Figure 1 shows a data cache system 100 coupled to a system processor 101 via a parallel processor bus 102, for example a 64 bit bus, and to system memory 113 via a parallel system bus 103, for example a 128 bit bus.

The data cache system 100 includes a memory controller 104, a data cache 105 and a write back buffer 106. The memory controller 104 and data cache 105 are coupled to the processor bus 102 via respective first and second parallel buses 107, 108 and the data cache 105 and write back buffer 106 are coupled to the system bus 103 via respective third and fourth parallel buses 109, 110.

The memory controller 104 is coupled to the data cache 105 via a fifth parallel bus 111 and the data cache 105 is couple to the write back buffer 106 via a sixth parallel bus 112.

The system memory 113 incorporates two types of memory, a first memory type 114 and a second memory type 115 that have different memory storage characteristics. For example, SRAM have an optimum burst size equal to the memory bus width (i.e. 1 or 2 beats) while SDRAM and DDR SDRAM can have an optimum burst size of up to 4 and 8 beats, where a beat is a part of a data burst equal to the width of a bus (i.e. the size of one beat corresponds to a single).

The data cache 105 includes cache memory 116, where the cache memory 116 is configured into cache lines, as is well known to a person skilled in the art. The size of cache memory used (i.e. the number of cache lines) varies dependent upon the type of cache being used, for example level 1 or level 2 cache.

The data cache 105 additionally includes a cache register 117 that is used to maintain status information on the data in cache line. The status information for each entry in a cache line, where an entry corresponds to a group of cache line bits equal to the width of the system bus 103, is arranged to indicate whether an entry is valid (i.e. if the data in the entry was previously read from the system memory at an associated system memory address) or dirty (i.e. if the data in the entry has been updated by the processor without a corresponding write back to system memory) or not valid (i.e. data that was not read from system memory).

By way of illustration figure 2 shows an example of a cache line 200 having 16 entries in which entries 0, 4, 13 and 15 are valid; entries 2 and 3 are not valid and entries 1, 5 to 12 and 14 are 'dirty'.

The memory controller 104 is configured to include information on the optimum burst sizes for the different types of memory devices incorporated within system memory 113, which in this embodiment are the first memory type 114 and the second memory type 115, however the system memory 113 could include any number of different memory device types. The optimum burst size information can be pre-programmed into the memory controller 104 or can be programmed into the memory controller 104 during operation of the data cache system 100.

For a write back data transfer the memory controller 104 selects an optimum burst size, for a given write back transfer, based upon the system memory address to which the data is to be written to.

The memory controller 104 can be arranged to instruct the data cache 105 of the optimum burst size prior to the transfer of data to the write back buffer 106, as described below, or to instruct the data cache 105 of the optimum burst size during a transfer of data to the write back buffer 106.

The optimum burst size information is provided to the data cache 105, which provides the information to the write back buffer 106.

The write back buffer 106 is arranged to receive cache line data and address from the data cache 105 for transferring to system memory 113 as part of a write back operation. Additionally, the write back buffer 106 is arranged to receive from the data cache 105 the cache line status register information.

For a given write back data transfer the write back buffer 106, using the optimum burst size information determined by the memory controller 104 and the cache line status register information, determines whether to transfer the cache line entries within a data burst or as single data transactions over the system bus 103 to the selected memory type. The cache data will be transferred as single entry transfers if it is more efficient to do so, for example if the data transfer threshold is below a certain figure such that it would be more efficient to transfer the data entries as a series of single data transfers rather than sending a data burst that may not be utilized by an appropriate number of dirty entries.

The write back buffer 106 makes the above determination based upon the number of available entries to be transferred to system memory 113 from a cache line that can be fit within the selected optimum burst size and the alignment of the data burst. For an optimal data transfer a data burst should ideally be aligned to an address that can be divided by the burst size without residue, for example a burst with size of 4 should be aligned to the addresses 0, 4, 8 and so on.

To make this determination a threshold value for the number of available dirty entries within a data cache line verses the optimum burst size is set.

For example, if the threshold for making the determination is that the number of available dirty entries to be transferred is greater than fifty percent of the optimum burst size then if the number of available entries within a cache line is less than fifty percent of the optimum burst size the relevant cache line entries will be sent as single data transactions. However, any threshold value may be selected.

By way of illustrated and with reference to the cache line shown in figure 2.

For a given write back transfer if the memory controller 104 selects an optimised burst size of two entries then dirty entries 1, 5, 12 and 14 shown in figure 2 will be transferred to system memory 113 as single data transactions while entries 6 and 7, 8 and 9, and 10 and 11 will be transferred in data bursts.

If the selected optimised burst size is four entries then dirty entry 1 will be transferred to system memory 113 as a single data transaction while entries 4 to 7, 8 to 11 and 12 to 15 will be sent in data bursts.

If the selected optimised burst size is eight entries then dirty entries 1, 5, 6, and 7 will be transferred to system memory 113 as single data transactions while entries 8 to 15 will be sent in a data burst.

The second and third illustrations above show some valid data being transferred back to system memory 113, however as this data will be the same as the data in system memory 113 the system memory data will not be altered.

Not-valid data should not be transferred to system memory 113.

By way of illustration the operation of the data cache system 100 performing a write back operation will now be described based upon the data cache 105 having a cache line 200 as illustrated in figure 2.

The memory controller 104 is pre-programmed with the address spaces for the first memory type 114 and the second memory type 115 and loaded with their respective optimum burst size, where in this example the first memory type 114 has an optimum burst receive size of 2 entries and the second memory type 115 has an optimum burst receive size of 4 entries, however any burst sizes may apply.

The memory controller 104 determines from the address information provided by the processor 101 which of the two memory types that the write back data should be transferred to and selects the optimum burst size based upon the appropriate memory type.

The memory controller 104 provides to the data cache 105 the optimum burst size for the memory type to which the data is to be transferred and the system memory address to which the data needs to be transferred.

A write back can be initiated by the memory controller 104, for example as a result of a 'miss' transaction, or by the processor 101, for example as part of a 'flush' command that causes the data cache 105 to synchronise its content with the system memory 113. In the case of write back resulting from a 'miss' transaction typically one cache line is transferred from the data cache 105 to the write back buffer 106 (i.e. one cache line is thrashed), whereas for a cache flush typically a few cache lines are transferred. The initiation by the memory controller 104 typically occurs as a result of a 'miss' occurrence, which typically results from a read or write request by the processor 101 from system memory 113 that can not be satisfied from cache causing the data cache 105 to read a new cache line with the needed data; to make available space for the new data the data cache 105 needs to thrash some other line that can include dirty bits.

In case of thrash the data cache 105 transfers the optimum burst size information, the system memory address to which the cache line data is to be transferred to, the cache register information, and the contents of the cache line to the write back buffer 106.

The transfer of the cache line data from the data cache 105 to the write back buffer 106 occurs over the parallel bus 112, where the parallel bus 112 is twice the width of an entry. Consequently the data cache 105 can transfer two entries (i.e. a group) to the write back buffer 106 in a single clock cycle. However, the parallel bus 112 between the data cache 105 and the write back buffer 106 can be of any size.

Before the data cache 105 transfers a group of data from the cache line to the write back buffer 106 the data cache 105 makes a determination as to whether any of the entries within a group are dirty. If any entries are designated as dirty then the group is transferred to the write back buffer 106. If no entries are designated as dirty then the entries are not transferred to the write back buffer 106. Once the required entries of the cache line have been transferred to the write back buffer 106 the data cache 105 sets an assert trigger (not shown) on the write back buffer 106.

As stated above, on receipt of the cache line data by the write back buffer 106 the write back buffer 106 makes a determination as to whether to transfer the cache line entries as part of a data burst or as single transactions. Accordingly, if the write back buffer 106 determines for a given optimum data burst size that the threshold value of entries that are dirty has been met and the burst address is aligned to its size then the data entries are transferred from the write back buffer 106 to the require system memory address as part of a data burst, otherwise the data entries are transferred as single data transactions. As such, if the entries threshold is set as being greater than fifty percent of the optimum burst size and if the cache line 116 is to be written to the first memory type 114 then dirty entries 1, 5, 12 and 14 will be transferred to the first memory type 114 as single data transactions while entries 6 and 7, 8 and 9, and 10 and 11 would be sent in data bursts.

If the cache line 116 is to be written to the second memory type 115 then dirty entry 1 will be transferred to the second memory type 115 as a single data transaction while entries 4 to 7, 8 to 11 and 12 to 15 would be sent in data bursts.

Although the above embodiment describes the use of the memory controller 104 with a write back buffer 106 that determines whether to transfer data to system memory 113 within a data burst or as a single data transaction based upon a threshold, the memory controller 104 could be used with other types of write back buffers 106. Equally, the determination could be performed in another element, for example within the memory controller itself.

## Claims

1. A data cache system (100) comprising:
a memory controller (104) for selecting a data burst size for transferring data from a data cache (105) to system memory (113) based upon memory characteristics associated with the system memory (113); the data cache system (100) **characterised by**:
a second controller (106) arranged to determine if the size of the data to be transferred from the data cache (105) to the system memory (113) exceeds a predetermined threshold of the selected data burst size, and in response to the determination determines whether to transfer the data entries as a series of single data transfers or a data burst.

2. A data cache system (100) according to claim 1, wherein the system memory (113) comprises a plurality of different memory types (114)(115) having different memory characteristics such that the memory controller (104) is arranged to select different data burst sizes for data to be transferred from the data cache (105) to the different memory types (114)(115).

3. A data cache system (100) according to claim 1, wherein the second controller (106) is arranged to transfer data from the data cache (105) to the system memory (113) within a data burst if the size of the data to be transferred exceeds the predetermined threshold.

4. A data cache system (100) according to claim 3, wherein the second controller is arranged to transfer data from the data cache (105) to the system memory (113) within a data burst if the size of the data to be transferred exceeds the predetermined threshold and the data burst size is aligned to an address.

5. A data cache system (100) according to claim 1, wherein the second controller (106) is arranged to transfer data from the data cache (105) to the system memory (113) within individual data transactions if the size of the data to be transferred is less than the predetermined threshold.

6. A data cache system (100) according to any of claims 1 to 5, wherein the predetermined threshold is fifty percent of the selected burst size.

7. A data cache system (100) according to any of claims 1 to 6, wherein the second controller (106) is a write back buffer.

8. A data cache system (100) according to any preceding claim, wherein a data transfer from the data cache (105) to system memory (113) is a write back data transfer.

9. A data cache system according to any preceding claim, wherein the data to be transferred is dirty and/or valid cache line entries.

10. A method for transferring data from a data cache (105) to system memory (113) comprising:
selecting a data burst size for transferring data from the data cache (105) to the system memory (113) based upon memory characteristics associated with the system memory (113); the method **characterised by** the steps of:
determining if the size of the data to be transferred from the data cache (105) to the system memory (113) exceeds a predetermined threshold of the selected data burst size;
transferring data from the data cache (105) to the system memory (113) within a data burst if the size of the data to be transferred exceeds the predetermined threshold; or
transferring data from the data cache (105) to the system memory (113) as a series of single data transfers if the size of the data to be transferred does not exceed the predetermined threshold.

## Patentansprüche

1. Datencachesystem (100) mit:
einer Speichersteuerung (104) zum Auswählen einer Datenschubgröße zum Senden von Daten aus einem Datencache (105) an einen Systemspeicher (113) auf der Grundlage von dem Systemspeicher (113) zugeordneten Speichercharakteristika, wobei das Datencachesystem (100) **gekennzeichnet ist durch**:
eine zweite Steuerung (106), die vorgesehen ist, um festzustellen, ob die Größe der aus dem Datencache (105) an den Systemspeicher (113) zu sendenden Daten einen vorgegebenen Schwellenwert der ausgewählten Datenschubgröße überschreitet, und als Reaktion auf die Bestimmung festzustellen, ob die Dateneinträge als Folge einzelner Datenübertragungen oder als Datenschub gesendet werden sollen.

2. Datencachesystem (100) nach Anspruch 1, bei dem der Systemspeicher (113) mehrere unterschiedliche Speichertypen (114, 115) mit unterschiedlichen Speichercharakteristika umfasst, so dass die die Speichersteuerung (104) vorgesehen ist, um unterschiedliche Datenschubgrößen für aus dem Datencache (105) an die unterschiedlichen Speichertypen (114, 115) zu sendende Daten auszuwählen.

3. Datencachesystem (100) nach Anspruch 1, bei dem die zweite Steuerung (106) vorgesehen ist, um Daten aus dem Datencache (105) in einem Datenschub an den Systemspeicher (113) zu senden, wenn die Größe der zu sendenden Daten den vorgegebenen Schwellenwert überschreitet.

4. Datencachesystem (100) nach Anspruch 3, bei dem die zweite Steuerung (106) vorgesehen ist, um Daten aus dem Datencache (105) in einem Datenschub an den Systemspeicher (113) zu senden, wenn die Größe der zu sendenden Daten den vorgegebenen Schwellenwert überschreitet und die Datenschubgröße mit einer Adresse abgeglichen ist.

5. Datencachesystem (100) nach Anspruch 1, bei dem die zweite Steuerung (106) vorgesehen ist, um Daten aus dem Datencache (105) in einzelnen Datentransaktionen an den Systemspeicher (113) zu senden, wenn die Größe der zu sendenden Daten geringer als der vorgegebene Schwellenwert ist.

6. Datencachesystem (100) nach einem der Ansprüche 1 bis 5, bei dem der vorgegebene Schwellenwert fünfzig Prozent der ausgewählten Schubgröße beträgt.

7. Datencachesystem (100) nach einem der Ansprüche 1 bis 6, bei dem die zweite Steuerung (106) ein Rückkopierpuffer ist.

8. Datencachesystem (100) nach einem der vorhergehenden Ansprüche, bei dem eine Datenübertragung aus dem Datencache (105) an den Systemspeicher (113) eine Rückkopierdatenübertragung ist.

9. Datencachesystem nach einem der vorhergehenden Ansprüche, bei dem die zu sendenden Daten modifiziert und/oder gültige Cacheblockeinträge sind.

10. Verfahren zum Senden von Daten aus einem Datencache (105) an einen Systemspeicher (113), das umfasst:
Auswählen einer Datenschubgröße zum Senden von Daten aus dem Datencache (105) an den Systemspeicher (113) auf der Grundlage von dem Systemspeicher (113) zugeordneten Speichercharakteristika; wobei das Verfahren durch die folgenden Schritte **gekennzeichnet** ist:
Bestimmen, ob die Größe der aus dem Datencache (105) an den Systemspeicher (113) zu sendenden Daten einen vorgegebenen Schwellenwert für die ausgewählte Datenschubgröße überschreitet,
Senden von Daten aus dem Datencache (105) an den Systemspeicher (113) in einem Datenschub, wenn die Größe der zu sendenden Daten den vorgegebenen Schwellenwert übersteigt, oder
Senden von Daten aus dem Datencache (105) an den Systemspeicher (113) als Folge einzelner Datenübertragungen, wenn die Größe der zu sendenden Daten den vorgegebenen Schwellenwert nicht übersteigt.

## Revendications

1. Système de mémoire cache de données (100) comportant :
un contrôleur de mémoire (104) pour sélectionner une dimension de rafale de données pour transférer les données depuis un cache de données (105) à une mémoire de système (113) en fonction des caractéristiques de mémoire associées à la mémoire de système (113) ; le système de mémoire cache de données (100) étant **caractérisé par** :
un second contrôleur (106) disposé pour déterminer si la dimension des données à transférer depuis le cache de données (105) à la mémoire de système (113) dépasse un seuil prédéterminé de la dimension de rafale de données sélectionnées, et en réponse à la détermination détermine si oui ou non il faut transférer les entrées de données en tant que série de transferts de données simples ou rafales de données.

2. Système de mémoire cache de données (100) selon la revendication 1, dans lequel la mémoire de système (113) comporte une pluralité de types de mémoire différents (114) (115) possédant différentes caractéristiques de mémoire telles que le contrôleur de mémoire (104) est disposé pour sélectionner différentes dimensions de rafales de données à transférer depuis le cache de données (105) aux différents types de mémoire (114) (115).

3. Système de mémoire cache de données (100) selon la revendication 1, dans lequel le second contrôleur (106) est agencé pour transférer les données depuis le cache de données (105) à la mémoire de système (113) à l'intérieur de la rafale de données si la dimension des données à transférer dépasse le seuil prédéterminé.

4. Système de mémoire cache de données (100) selon la revendication 3, dans lequel le second contrôleur est agencé pour transférer les données depuis le cache de données (105) à la mémoire de système (113) dans une rafale de données si la dimension des données à transférer dépasse le seuil prédéterminé et si la dimension de rafales de données est alignée sur une adresse.

5. Système de mémoire cache de données (100) selon la revendication 1, dans lequel le second contrôleur (106) est agencé pour transférer des données depuis le cache de données (105) à la mémoire de système (113) à l'intérieur de transactions de données individuelles si la dimension des données à transférer est inférieure au seuil prédéterminé.

6. Système de mémoire cache de données (100) selon l'une quelconque des revendications 1 à 5, dans lequel le seuil prédéterminé est 50 % de la dimension de rafales sélectionnées.

7. Système de mémoire cache de données (100) selon l'une quelconque de revendication 1 à 6, dans lequel le second contrôleur (106) est une mémoire tampon d'écriture différée.

8. Système de mémoire cache de données (100) selon l'une quelconque des revendications précédentes, dans lequel un transfert de données depuis le cache de données (105) à la mémoire de système (113) est un transfert de données d'écriture différée.

9. Système de mémoire cache de données selon l'une quelconque des revendications précédentes, dans lequel les données à transférer sont des entrées de ligne cache altérées et/ou valides.

10. Procédé pour transférer des données depuis un cache de données (105) à une mémoire de système (113) comportant :
la sélection d'une dimension de rafales de données pour transférer les données depuis le cache de données (105) à la mémoire de système (113) en fonction des caractéristiques de mémoire associées à la mémoire de système (113) ; le procédé étant **caractérisé par** les étapes consistant à :
déterminer si la dimension des données à transférer depuis le cache de données (105) à la mémoire de système (113) dépasse un seuil prédéterminé de la dimension de rafales de données sélectionnées ;
transférer les données depuis le cache de données (105) à la mémoire de système (113) à l'intérieur d'une rafale de données si la dimension des données à transférer dépasse le seuil prédéterminé ; ou
transférer les données depuis le cache de données (105) à la mémoire de système (113) en tant que série de transferts de données uniques si la dimension des données à transférer ne dépasse pas le seuil prédéterminé.
